# EUROPEAN PATENT SPECIFICATION

(11) **EP 3 508 740 B1**
(45) Date of publication and mention of the grant of the patent: **01.04.2020**
(21) Application number: 18150596.7
(22) Date of filing: 08.01.2018
(51) Int. Cl.: F16B 33/00

(54) **CONNECTION ARRANGEMENT WITH A SEALED CONNECTION AND INTERNAL COMBUSTION ENGINE COMPRISING A CONNECTION ARRANGEMENT**
VERBINDUNGSANORDNUNG MIT EINER ABGEDICHTETEN VERBINDUNG UND VERBRENNUNGSMOTOR MIT EINER VERBINDUNGSANORDNUNG
AGENCEMENT DE CONNEXION COMPORTANT UNE CONNEXION ÉTANCHE ET MOTEUR À COMBUSTION INTERNE COMPRENANT UN AGENCEMENT DE CONNEXION

(43) Date of publication of application: 10.07.2019
(73) Proprietor: Mann + Hummel GmbH, 71636 Ludwigsburg (DE)
(72) Inventor: Chandra Kumar, Karun, 560033 Bangalore (IN); Surve, Rohit Dattatray, 560022 Bangalore (IN)
(74) Representative: Nickolaus, Mathias

(56) References cited:
- US-A- 4 201 110
- US-A- 5 094 579
- US-B1- 9 377 046

## Description

### Technical Field

The invention relates to a connection arrangement for mounting a first part to a second part with a sealed connection, in particular for mounting an automotive engine component, in particular for mounting a cylinder head cover of an internal combustion engine of a vehicle.

### Prior Art

In the state of the art aluminum cylinder head covers are mounted using center bolt connection arrangements using bolts with fixed head. With the switch to plastic cylinder head covers center bolt connection arrangements are not preferred, due to the reduction in stiffness of plastic covers compared to aluminum covers.

However, some vehicle or engine manufacturers are not comfortable with changing the mounting layout and would like to continue using cylinder head covers with the center bolt connection arrangement type. Hence using a stepped bolt would be preferable for mounting a plastic cover with reduced stiffness.

Yet in some cases a threaded stud in a center mounting layout is already available projecting upward from the cylinder head. Therefore a connection arrangement using this treaded stud would be a preferred solution for these vehicle or engine manufacturers.

Document US 5,094,579 A discloses a threaded fastener and grommet assembly for joining two apertured parts.

Document US 4,201,110 A discloses a hub nut with a washer.

Document US 9,377,046 B1 discloses a fastener assembly including a female insert having a head and a sleeve which extends from the head.

### Disclosure of the Invention

It is an object of the invention to provide a connection arrangement for mounting two parts, in particular a cylinder head cover to a cylinder head, with a reliable and sealed connection.

The object is achieved according to an aspect of the invention by a connection arrangement for mounting a first part to a second part with a sealed connection comprising at least one threaded headless bolt projecting through an opening in the first part and a cup nut comprising a head, a shaft and a flange, the flange being arranged between the head and the shaft, the shaft having an internal thread, wherein a gasket, in particular a ring like gasket, is arranged around an external shell of the shaft of the cup nut, wherein the cup nut is screwed to the top of the bolt, wherein the gasket is arranged between the first part and the flange of the cup nut.

The other claims, the description and the drawings describe advantageous embodiments of the invention.

Due to the inventive connection arrangement a flanged cup nut may be used together with a threaded headless bolt to mount a first part to a second part, in particular a cover of a cylinder head to the cylinder head of an internal combustion engine of a vehicle. The bolts normally used for establishing a connection arrangement as for mounting a first part such as a cylinder head cover to a cylinder head are fixed to the cylinder head and exhibit a fixed height. The bolt height, if fixed, may be adjusted to the assembly using the cup nuts. The cylinder head cover may also be adjusted to the assembly using the cup nuts. The cup nut serves to limit compression on the first part, which is particularly useful if the first part is a plastic part with a reduced stiffness compared to a metal part. The head of the cup nut does not need to exhibit any specific shape nor does it need to be adjusted or adapted to the connection arrangement.

A rubber seal ring with a cap, in particular a metal cap, may be used advantageously for establishing a sealed connection between the two parts. Thus the connection arrangement may be sealing at the same time. The rubber seal ring may also serve for compensating for tolerances due to manufacturing and assembly.

Normal nuts used for bolting cannot ensure depth control nor sealing through the threads. Both of these problems are solved according to the inventive connection arrangement.

A closed cup nut can be used to limit the extent to which the nut will engage through the thread. This cannot be achieved with regular nuts since they are open on both ends. Cup nuts are available in the market and are generally used for aesthetic purposes, but not to control compression in a connection arrangement such as used for mounting a plastic part to a metal part. In the inventive connection arrangement the cup nut is used as a compression limiter. This is possible since the bolt's threaded part will eventually go deep enough to make contact with the inside of the head of the cup nut. At this point further torqueing will not add additional force on to the plastic part since the cup nut cannot move further onto the bolt.

The inventive connection arrangement also ensures loss proof sealing using a rubber seal ring as a gasket contacting radially to the cup nut and also axially on to the plastic part and the flange of the cup nut. A cap, for instance a metal cap, may be used between the gasket and the cup nut which may be glued or molded with on top of the rubber seal ring to ensure that there is no damage to the rubber seal ring during torqueing. Yet the gasket may also be used without a cap for this purpose. Since the cup nut is not directly in contact with the plastic part, the gasket may also serve as an acoustic decoupling method due to the rubber interface.

Thus, a difference to connection arrangements according to state of the art is that a cup nut with the head's upper face closed and having an internal tapping is used together with a threaded bolt for mounting a first part to a second part, where the first part in particular may be a plastic part. A gasket, in particular a rubber seal ring with a glued or molded-on cap may be used for sealing the connection arrangement and prevent a leakage through the tread of the bolt. The gasket may advantageously serve for axial as well as radial sealing.

Currently, threaded nuts are used for bolting center sections of aluminum cam covers. These normal nuts cannot stop the compression as the nut can continuously be torqued without a depth control. This could cause a high load on the plastic part which may ultimately fail. An advantage of the inventive connection arrangement is that the depth of the nut engagement can be controlled and thus the force on a plastic cover can also be controlled and limited. Currently used connection arrangements would also possibly cause leaks via the threads. Advantageously the inventive connection arrangement may be provided with a gasket, in particular a rubber seal ring, in particular with a glued or molded-on cap for sealing the connection.

According to an advantageous embodiment, a ring-like cap may be arranged between the flange of the cup nut and the gasket. The cap may protect the gasket from being damaged by excessive friction due to torqueing the cup nut to the bolt. The cap may be a metal cap or may be made of ceramics or plastics.

According to an advantageous embodiment, at least part of the gasket may be arranged between the opening and the shaft of the cup nut. In the opening the bolt is protruding and the shaft of the cup nut is surrounding the bolt. The shaft of the cup nut may be sealed radially against the first part by sealing the opening. Further the part of the gasket serves for cushioning mechanically the cup nut against the first part. Particularly, if the first part is made of plastic material, this prevents the plastic part to be damaged during mounting.

According to an advantageous embodiment, the cap may be at least partly shaped corresponding to a shape of the gasket at the interface between gasket and cap. Thus the contact area between gasket and cap is advantageously formed in a way that possible damage may be prevented when the gasket together with the cap is mounted and the cup nut is torqued. Further, the gasket and the cap may be packaged together for assembling the cylinder head cover to the cylinder head.

According to an advantageous embodiment, the gasket may be fixed to the cap.. Handling during the assembly process may be quite easy and the cap may not be loosened. The cap may be glued to the gasket.

According to an advantageous embodiment, the gasket may be molded to the cap. This is another advantageous way of fixing the cap to the gasket. Thus the cap is connected to the gasket by molding which also serves for advantageous sealing of the cup nut against the opening of the first part.

According to an advantageous embodiment, the head of the cup nut may be a hexagon head for tightening which is arranged at a closed face of the cup nut. A hexagon head represents an advantageous interface for torqueing the cup nut with a standard screw wrench which may be used in assembly of the cylinder head.

According to an advantageous embodiment, the cup nut is screwed to the top of the bolt with direct contact between cup nut and bolt at top surface. In another embodiment, the cup nut can be screwed to the top of the bolt with a small gap remaining between cup nut and bolt top surface.

According to an advantageous embodiment, the cap may overlap a front face and a part of the outer shell of the gasket. By this way the gasket is protected against damage during assembly of the gasket, mounting the cup nut and torqueing the cup nut.

According to an advantageous embodiment, the cap may comprise a central opening with a recess on a side of the cap pointing to the flange of the cup nut for accommodating a part of the flange in a mounted position of the cap. Thus, the cap may be positioned in a centralized position by the cup nut, because the flange of the cup nut fits into the recess of the cap.

According to an advantageous embodiment, the gasket may be a rubber washer. A rubber washer or a sealing component of a similar usual sealing material such as EPDM (ethylene propylene diene monomer rubber) or advantageously AEM (ethylene acrylic rubber) may be used as a gasket in an advantageous way. Such a gasket exhibits the appropriate elasticity for sealing the cup nut against the opening of the first part in a reliable manner. Further the materials rubber or EPDM advantageously are resistant to liquids, which may be present in an internal combustion engine, such as oil. Further elastomer materials such as AEM or EPDM are useable in a wide range of temperatures, which occur in a normal use of a vehicle.

According to an advantageous embodiment, the gasket may comprise a shaft protruding in an axial direction for being arranged between the opening of the first part and the shaft of the cup nut. The shaft may serve for centralizing the gasket during assembly of the gasket. Further the shaft may serve for a reliable sealing of the cup nut against the opening of the first part, ensuring a radial seal.

According to an advantageous embodiment, the gasket may comprise a ring-like contour pointing outwards in a radial direction for accommodating the cap when fixed to the gasket. The ring-like contour serves for accommodating the cap and the gasket on the surface of the plastic part and delivers a tight contact area between the gasket assembly to the flange of the cap and the plastic part, ensuring an axial seal.

According to another advantageous embodiment, a gasket sealing in either axial or radial direction is sufficient.

### Brief Description of the Drawings

The present invention together with the above-mentioned and other objects and advantages may best be understood from the following detailed description of the embodiments, but not restricted to the embodiments, wherein is shown in:
- Figure 1: an isometric view of a cylinder head cover mounted with a connection arrangement according to an embodiment of the invention;
- Figure 2: a cross-sectional view of a connection arrangement according to an embodiment of the invention;
- Figure 3: an isometric view of the cup nut comprised in the connection arrangement according to an embodiment of the invention;
- Figure 4: another isometric view of the cup nut shown in Figure 3;
- Figure 5: a cross-sectional cut view of the cup nut shown in Figure 3;
- Figure 6: a top view of the cup nut shown in Figure 3;
- Figure 7: an isometric view of a gasket comprised in the connection arrangement according to an embodiment of the invention;
- Figure 8: a cross-sectional view of the gasket shown in Figure 7;
- Figure 9: a top view of the gasket shown in Figure 7;
- Figure 10: an isometric view of a cap comprised in the connection arrangement according to an embodiment of the invention;
- Figure 11: a cross-sectional view of the cap shown in Figure 10; and
- Figure 12: a top view of the cap shown in Figure 10.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

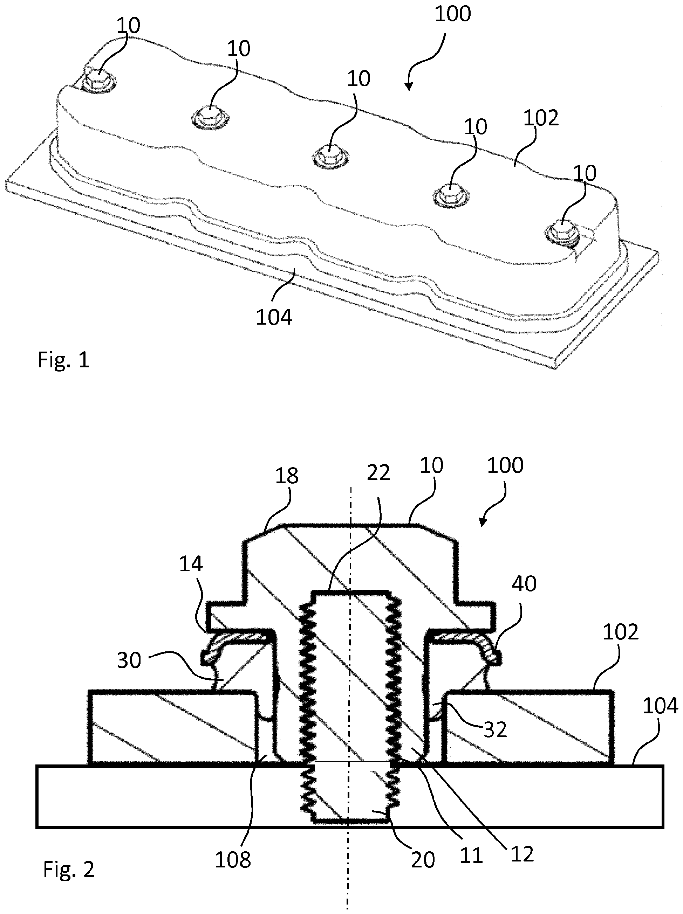

Figure 1 depicts an isometric view of a cylinder head cover as a first part 102 mounted with a connection arrangement 100 to a second part 104, which may be a cylinder head block according to an embodiment of the invention. A connection arrangement 100 as shown in Figure 2 in a cross-section is used for mounting the cylinder head cover 102 to the cylinder head 104. Only the cup nuts 10 as part of the connection arrangement 100 are to be seen on the upper surface of the cylinder head cover 102.

In Figure 2 a cross-sectional view of a connection arrangement 100 according to an embodiment of the invention is shown. The connection arrangement 100 comprises one threaded bolt 20 projecting through an opening 108 in the first part 102 and a cup nut 10 comprising a head 18, a shaft 12 and a flange 14. The flange 14 of the cup nut 10 is arranged between the head 18 and the shaft 12. The shaft 12 has an internal thread 11. A ring-like gasket 30 is arranged around an external shell of the shaft 12 of the cup nut 10. The gasket 30 is arranged between the first part 102 and the flange 14 of the cup nut 10. Part of the gasket 30, a shaft 32 thereof, is arranged between the opening 108 and the shaft 12 of the cup nut 10. The gasket 30 may be a rubber washer, or another commonly used sealing material.

The gasket 30, in particular a rubber seal ring with a glued or molded-on cap 40 may be used for sealing the connection arrangement 100 and prevent a leakage through the opening 108 and the gap between the cup nut 10 and the first part 102. The gasket 30 may advantageously serve for axial as well as radial sealing. The gasket 30 may also serve for compensating for tolerances due to manufacturing and assembly.

A ring-like cap 40 is arranged between the flange 14 of the cup nut 10 and the gasket 30. The cap 40 is at least partly shaped corresponding to a shape of the gasket 30 at the interface between gasket 30 and cap 40. The cap 40 is made of a material harder than the gasket 30, for instance of metal.

The gasket 30 may be fixed to the cap 40, e.g. glued to the cap 40. Alternatively, the gasket 30 could be molded to the cap 40 in a molding process. Alternatively, the gasket 30 may also be used without a cap 40. Since the cup nut 10 thus is not directly in contact with the plastic part 102, the gasket 30 may also serve as an acoustic decoupling element due to the rubber interface.

The bolts 20 normally used for establishing a connection arrangement 100 as for mounting a first part 102 such as a cylinder head cover to a cylinder head 104 are fixed to the cylinder head 104 and exhibit a fixed height. The bolts 20 may be adjusted to the assembly using the cup nuts 10. The cylinder head cover 102 may also be adjusted to the assembly using the cup nuts 10.

The cup nut 10 is screwed to the top 22 of the bolt 20. Because the cup nut 10 may be torqued down to the top of the bolt 20, the distance between the upper surface of the first part 102 and the flange 14 of the cup nut 10 is fixed according to design of the component's first part 102, bolt 20 and cup nut 10. Thus the compression of the gasket 30 and the pressure on the first part 102 is limited, which is in particular advantageous for first parts made of plastic material. This is possible since the threaded part of the bolt 20 will eventually reach deep enough such that the inside of the head 18 of the cup nut 10 makes contact to the top of the bolt 20. At this point further torqueing will not add additional force on to the plastic part 102 since the cup nut 10 cannot move further down on the bolt 20.

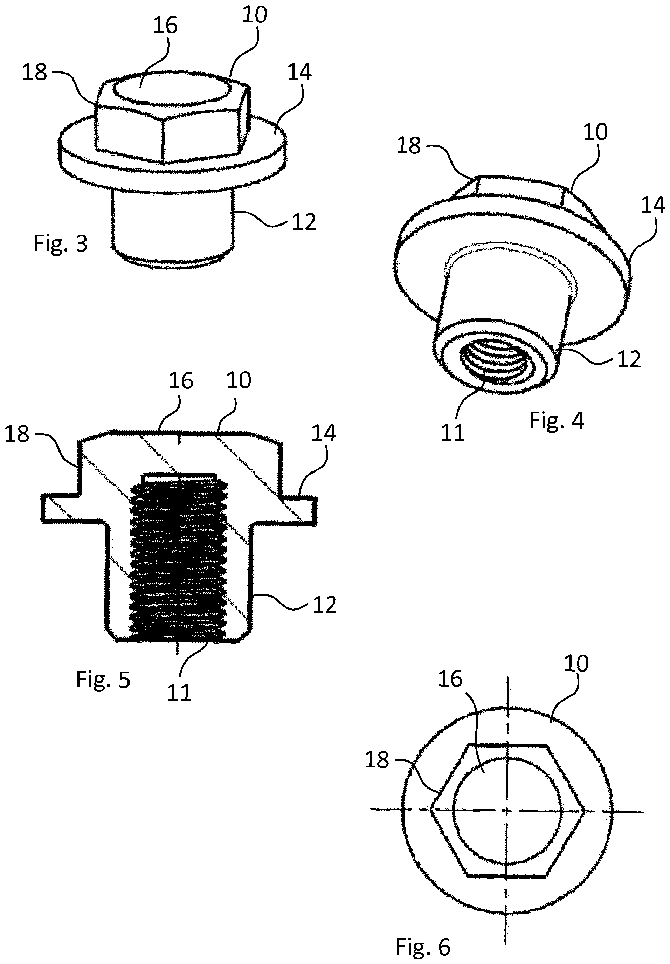

Figure 3 depicts an isometric view of the cup nut 10 comprised in the connection arrangement 100 according to an embodiment of the invention. The head 18 of the cup nut 10 is a hexagon head 18 for tightening which is arranged on a closed face 16 of the cup nut 10. Such a hexagon head 18 is a commonly used shape for a screw head, adapted to be torqued by standard tools, like a screw wrench.

Figure 4 depicts another isometric view of the cup nut 10 shown in Figure 3. As it is shown from below the cup nut 10, the internal thread 11 in the inside of the shaft 12 of the cup nut 10 can be seen.

In Figure 5, a cross-sectional cut view of the cup nut 10 shown in Figure 3, whereas in Figure 6, a top view of the cup nut 10 is depicted. The cross-section shows the length of the internal thread 11, which reaches above the flange 14 up to the head 18 of the cup nut 10. In the top view of Figure 6 the hexagon head 18 is to be seen.

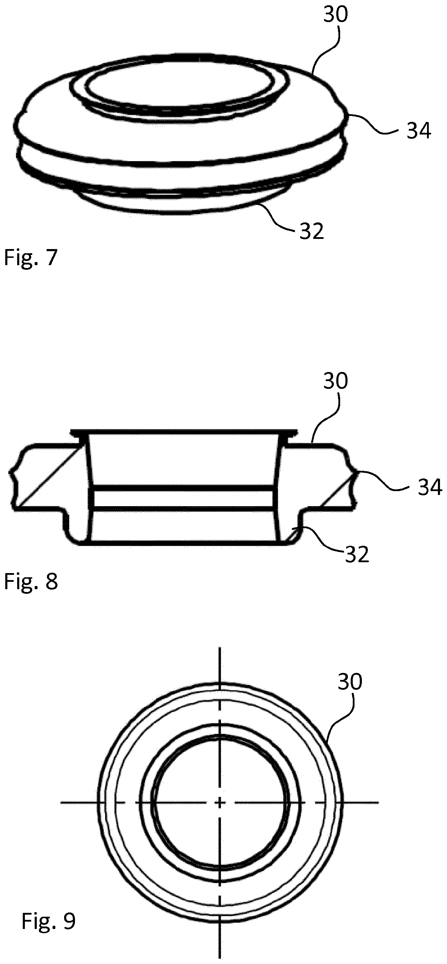

Figure 7 shows an isometric view of a gasket 30 comprised in the connection arrangement 100 according to an embodiment of the invention, whereas Figure 8 shows a cross-sectional view of the gasket 30 and Figure 9 a top view of the gasket 30. The gasket 30 comprises a shaft 32 protruding in an axial direction for being arranged between the opening 108 of the first part 102 and the shaft 12 of the cup nut 10, as can be seen in the cross-sectional view in Figure 2. The shaft 32 may serve for centralizing the gasket 30 during assembly of the gasket 30 in the connection arrangement 100 to the bolt 20 and the cylinder head cover as the first part 102. Further the shaft 32 may serve for a reliable sealing of the cup nut 10 against the opening 108 of the first part 102.

As is to be seen in Figure 8, the gasket 30 comprises a ring-like contour 34 pointing outwards in a radial direction for accommodating the cap 40 when fixed to the gasket 30. It also serves as a sealing surface to provide axial seal between flange 14 and first part 102 through the cap 40.

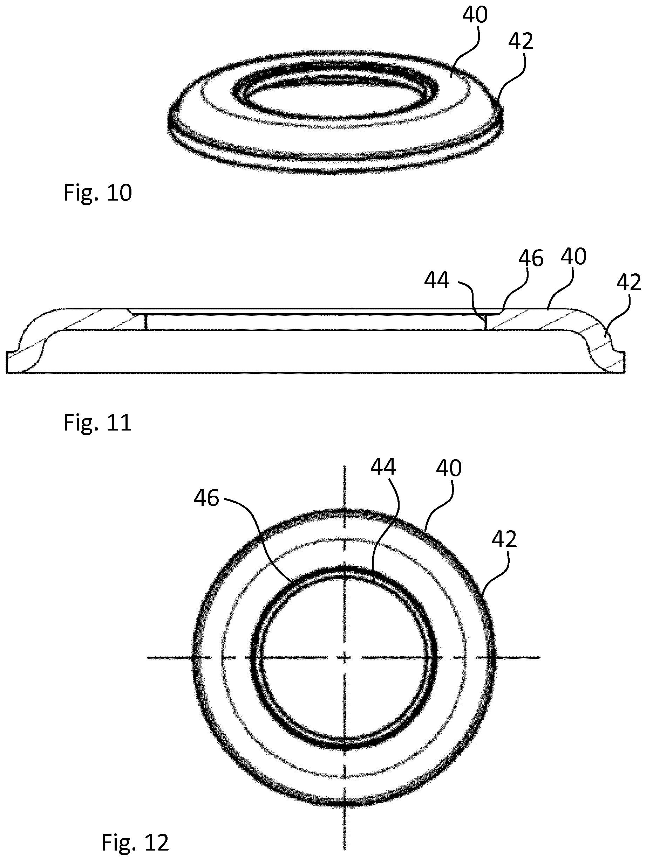

In Figure 10, an isometric view of a cap 40 comprised in the connection arrangement 100 according to an embodiment of the invention is depicted, whereas in Figure 11 a cross-sectional view of the cap 40 and in Figure 12 a top view of the cap 40 is shown. As in particular can be seen in the cross-section, the cap 40 comprises a central opening 44 with a recess 46 on a side of the cap 40 pointing to the flange 14 of the cup nut 10 for accommodating a part of the flange 14 in a mounted position of the cap 40.

Further, as particularly is to be seen in Figures 10 and 11, the cap 40 is at least partly shaped corresponding to a shape of the gasket 30 at the interface between gasket 30 and cap 40. For this purpose, the cap 40 is shaped to overlap a front face and a part of the outer shell of the gasket 30. By this way the gasket 30 may be protected against damage during assembly of the gasket 30, mounting the cup nut 10 and torqueing the cup nut 10.

## Claims

1. A connection arrangement (100) for mounting a first part (102) to a second part (104) with a sealed connection comprising at least one threaded headless bolt (20) projecting through an opening (108) in the first part (102) and a cup nut (10) comprising a head (18), a shaft (12) and a flange (14), the flange (14) being arranged between the head (18) and the shaft (12), the shaft (12) having an internal thread (11), wherein a gasket (30) is arranged around an external shell of the shaft (12) of the cup nut (10), wherein the cup nut (10) is screwed to the bolt (20), wherein the gasket (30) is arranged between the first part (102) and the flange (14) of the cup nut (10).

2. The connection arrangement according to claim 1, wherein a cap (40) is arranged between the flange (14) of the cup nut (10) and the gasket (30).

3. The connection arrangement according to claim 1 or 2, wherein at least part of the gasket (30) is arranged between the opening (108) and the shaft (12) of the cup nut (10).

4. The connection arrangement according to any one of the claims 2 to 3, wherein the cap (40) is at least partly shaped corresponding to a shape of the gasket (30) at the interface between gasket (30) and cap (40).

5. The connection arrangement according to any one of the claims 2 to 4, wherein the gasket (30) is fixed to the cap (40) or at least make contact with the cap.

6. The connection arrangement according to any one of the claims 2 to 5, wherein the gasket (30) is molded to the cap (40).

7. The connection arrangement according to any one of the preceding claims, wherein the head (18) of the cup nut (10) is a hexagon head (18) for tightening which is arranged at a closed face (16) of the cup nut (10).

8. The connection arrangement according to any one of the claims 2 to 7, wherein the cap (40) overlaps a front face of the flange (14) and at least a part of the outer shell of the gasket (30).

9. The connection arrangement according to any one of the claims 2 to 8, wherein the cap (40) comprises a central opening (44) with a recess (46) on a side of the cap (40) pointing to the flange (14) of the cup nut (10) for accommodating a part of the flange (14) in a mounted position of the cap (40).

10. The connection arrangement according to any one of the preceding claims, wherein the gasket (30) is a softer material compared to the first part (102) and the cup nut (10), in particular a rubber washer.

11. The connection arrangement according to any one of the preceding claims, wherein the gasket (30) comprises a shaft (32) protruding in an axial direction for being arranged between the opening (108) of the first part (102) and the shaft (12) of the cup nut (10).

12. The connection arrangement according to any one of the claims 2 to 11, wherein the gasket (30) comprises a contour (34) pointing outwards in a radial direction to enable an axial seal between the flange (14) of the cup nut (10) and the first part (102) for accommodating the cap (40) when fixed to the gasket (30).

13. Internal combustion engine comprising a first part and a second part, wherein one of both parts is a plastic part, **characterized in that** both parts are connected with a connection arrangement according to one of the previous claims.

14. Internal combustion engine comprising a cylinder head and a cylinder head cover made of plastic material, **characterized in that** both parts are connected with a connection arrangement according to one of the claims 1 to 12.

## Patentansprüche

1. Verbindungsanordnung (100) zum Befestigen eines ersten Teils (102) an einem zweiten Teil (104) mit einer dichten Verbindung, die wenigstens einen kopflosen Gewindebolzen (20), der durch eine Öffnung (108) in dem ersten Teil (102) hervorsteht, und eine Überwurfmutter (10) umfasst, die einen Kopf (18), einen Schaft (12) und einen Flansch (14) umfasst, wobei der Flansch (14) zwischen dem Kopf (18) und dem Schaft (12) angeordnet ist, wobei der Schaft (12) ein Innengewinde (11) hat, wobei eine Dichtung (30) um eine Außenschale des Schafts (12) der Überwurfmutter (10) angeordnet ist, wobei die Überwurfmutter (10) auf den Bolzen (20) geschraubt ist, wobei die Dichtung (30) zwischen dem ersten Teil (102) und dem Flansch (14) der Überwurfmutter (10) angeordnet ist.

2. Verbindungsanordnung nach Anspruch 1, wobei eine Verschlusskappe (40) zwischen dem Flansch (14) der Überwurfmutter (10) und der Dichtung (30) angeordnet ist.

3. Verbindungsanordnung nach Anspruch 1 oder 2, wobei wenigstens ein Teil der Dichtung (30) zwischen der Öffnung (108) und dem Schaft (12) der Überwurfmutter (10) angeordnet ist.

4. Verbindungsanordnung nach einem der Ansprüche 2 bis 3, wobei die Verschlusskappe (40) wenigstens teilweise entsprechend einer Form der Dichtung (30) an der Schnittstelle zwischen Dichtung (30) und Verschlusskappe (40) geformt ist.

5. Verbindungsanordnung nach einem der Ansprüche 2 bis 4, wobei die Dichtung (30) an der Verschlusskappe (40) befestigt ist oder wenigstens in Kontakt mit der Verschlusskappe steht.

6. Verbindungsanordnung nach einem der Ansprüche 2 bis 5, wobei die Dichtung (30) an der Verschlusskappe (40) angeformt ist.

7. Verbindungsanordnung nach einem der obigen Ansprüche, wobei der Kopf (18) der Überwurfmutter (10) ein Sechskantkopf (18) zum Anziehen ist, der an einer geschlossenen Fläche (16) der Überwurfmutter (10) angeordnet ist.

8. Verbindungsanordnung nach einem der Ansprüche 2 bis 7, wobei die Verschlusskappe (40) eine Stirnfläche des Flansches (14) und wenigstens einen Teil der Außenhülle der Dichtung (30) überlappt.

9. Verbindungsanordnung nach einem der Ansprüche 2 bis 8, wobei die Verschlusskappe (40) eine zentrale Öffnung (44) mit einer Aussparung (46) auf einer Seite der Verschlusskappe (40) aufweist, die zum Flansch (14) der Überwurfmutter (10) zeigt, um einen Teil des Flansches (14) in einer Einbauposition der Verschlusskappe (40) aufzunehmen.

10. Verbindungsanordnung nach einem der obigen Ansprüche, wobei die Dichtung (30) ein weicheres Material im Vergleich zum ersten Teil (102) und der Überwurfmutter(10) ist, insbesondere eine Gummischeibe.

11. Verbindungsanordnung nach einem der obigen Ansprüche, wobei die Dichtung (30) einen in Achsrichtung vorstehenden Schaft (32) umfasst, der zwischen der Öffnung (108) des ersten Teils (102) und dem Schaft (12) der Überwurfmutter (10) angeordnet ist.

12. Verbindungsanordnung nach einem der Ansprüche 2 bis 11, wobei die Dichtung (30) eine in Radialrichtung nach außen weisende Kontur (34) umfasst, um eine Axialdichtung zwischen dem Flansch (14) der Überwurfmutter (10) und dem ersten Teil (102) zur Aufnahme der Verschlusskappe (40) zu ermöglichen, wenn diese an der Dichtung (30) befestigt ist.

13. Brennkraftmaschine umfassend ein erstes Teil und ein zweites Teil, wobei eines der beiden Teile ein Kunststoffteil ist, **dadurch gekennzeichnet, dass** beide Teile mit einer Verbindungsanordnung nach einem der obigen Ansprüche verbunden sind.

14. Brennkraftmaschine umfassend einen Zylinderkopf und eine Zylinderkopfhaube aus Kunststoff, **dadurch gekennzeichnet, dass** beide Teile mit einer Verbindungsanordnung nach einem der obigen Ansprüche 1 bis 12 verbunden sind.

## Revendications

1. Agencement de raccordement (100) pour le montage d'une première partie (102) à une seconde partie (104) avec un raccordement étanche comprenant au moins un boulon sans tête fileté (20) faisant saillie à travers une ouverture (108) dans la première partie (102) et un écrou à chapeau (10) comprenant une tête (18), une tige (12) et un rebord (14), le rebord (14) étant disposé entre la tête (18) et la tige (12), la tige (12) ayant un filetage interne (11), dans lequel un joint d'étanchéité (30) est disposé autour d'une enveloppe externe de la tige (12) de l'écrou à chapeau (10), dans lequel l'écrou à chapeau (10) est vissé au boulon (20), dans lequel le joint d'étanchéité (30) est disposé entre la première partie (102) et le rebord (14) de l'écrou à chapeau (10).

2. Agencement de raccordement selon la revendication 1, dans lequel un capuchon (40) est disposé entre le rebord (14) de l'écrou à chapeau (10) et le joint d'étanchéité (30).

3. Agencement de raccordement selon la revendication 1 ou 2, dans lequel au moins une partie du joint d'étanchéité (30) est disposée entre l'ouverture (108) et la tige (12) de l'écrou à chapeau (10).

4. Agencement de raccordement selon l'une quelconque des revendications 2 à 3, dans lequel le capuchon (40) est au moins partiellement profilé en correspondance avec une forme du joint d'étanchéité (30) au niveau de l'interface entre le joint d'étanchéité (30) et le capuchon (40).

5. Agencement de raccordement selon l'une quelconque des revendications 2 à 4, dans lequel le joint d'étanchéité (30) est fixé au capuchon (40) ou au moins fait un contact avec le capuchon.

6. Agencement de raccordement selon l'une quelconque des revendications 2 à 5, dans lequel le joint d'étanchéité (30) est moulé au capuchon (40).

7. Agencement de raccordement selon l'une quelconque des revendications précédentes, dans lequel la tête (18) de l'écrou à chapeau (10) est une tête hexagonale (18) à des fins de serrage qui est disposée au niveau d'une face fermée (16) de l'écrou à chapeau (10).

8. Agencement de raccordement selon l'une quelconque des revendications 2 à 7, dans lequel le capuchon (40) chevauche une face frontale du rebord (14) et au moins une partie de l'enveloppe externe du joint d'étanchéité (30).

9. Agencement de raccordement selon l'une quelconque des revendications 2 à 8, dans lequel le capuchon (40) comprend une ouverture centrale (44) avec un évidement (46) sur un côté du capuchon (40) pointant vers le rebord (14) de l'écrou à chapeau (10) pour accueillir une partie du rebord (14) dans une position montée du capuchon (40).

10. Agencement de raccordement selon l'une quelconque des revendications précédentes, dans lequel le joint d'étanchéité (30) est un matériau plus mou par comparaison avec la première partie (102) et l'écrou à chapeau (10), en particulier une rondelle en caoutchouc.

11. Agencement de raccordement selon l'une quelconque des revendications précédentes, dans lequel le joint d'étanchéité (30) comprend une tige (32) faisant saillie dans une direction axiale pour être disposée entre l'ouverture (108) de la première partie (102) et la tige (12) de l'écrou à chapeau (10).

12. Agencement de raccordement selon l'une quelconque des revendications 2 à 11, dans lequel le joint d'étanchéité (30) comprend un contour (34) pointant vers l'extérieur dans une direction radiale pour permettre une étanchéité axiale entre le rebord (14) de l'écrou à chapeau (10) et la première partie (102) pour accueillir le capuchon (40) lorsqu'il est fixé au joint d'étanchéité (30).

13. Moteur à combustion interne comprenant une première partie et une seconde partie, dans lequel l'une parmi l'une et l'autre des parties est une partie en plastique, **caractérisé en ce que** l'une et l'autre des parties sont raccordées à un agencement de raccordement selon l'une des revendications précédentes.

14. Moteur à combustion interne comprenant une culasse de cylindre et un couvercle de culasse de cylindre constitués de matière plastique, **caractérisé en ce que** l'une et l'autre des parties sont raccordées avec un agencement de raccordement selon l'une des revendications 1 à 12.
